# EUROPÄISCHE PATENTSCHRIFT

(11) **EP 1 520 732 B1**
(45) Veröffentlichungstag und Bekanntmachung des Hinweises auf die Patenterteilung: **11.03.2015**
(21) Anmeldenummer: 04102858.0
(22) Anmeldetag: 22.06.2004
(51) Int. Cl.: B60C 1/00, C08L 19/00, C08L 21/00

(54) **Füllstoff für Elastomere**
Fillers for Elastomers
Matières de remplissage pour elastomères

(30) Priorität: 26.09.2003 DE 10344729
(43) Veröffentlichungstag der Anmeldung: 06.04.2005
(73) Patentinhaber: Continental Reifen Deutschland GmbH, 30165 Hannover (DE)
(72) Erfinder: Recker, Carla, 30167 Hannover (DE)
(74) Vertreter: Finger, Karsten

(56) Entgegenhaltungen:
- EP-A- 1 110 986
- WO-A-02/12389

## Beschreibung

Die Erfindung betrifft einen Füllstoff für Elastomere, der insbesondere für Kautschukvulkanisate, die in der Reifenindustrie verwendet werden, geeignet ist. Die Erfindung betrifft weiter ein Verfahren zur Herstellung dieses Füllstoffs, eine den Füllstoff enthaltende Kautschukmischung und ein daraus hergestelltes Vulkanisationsprodukt, insbesondere einen Fahrzeugreifen.

Füllstoffe werden in Kautschukmischungen genutzt, um einerseits das Endprodukt zu verbilligen und andererseits die physikalisch-mechanischen Kautschukeigenschaften gezielt zu beeinflussen. In der Kautschukindustrie unterscheidet man die Füllstoffe nach der Ausgeprägtheit ihrer Wirkung (Aktivität). Die Aktivität eines Füllstoffes ist abhängig von der Teilchengröße der Füllstoffpartikel, deren spezifischer Oberfläche, der geometrischen Gestalt der Partikel und der chemischen Zusammensetzung. So bezeichnet man Füllstoffe als aktiv (verstärkende Füllstoffe), bei denen ein Eigenschaftsoptimum in Abhängigkeit ihrer Konzentration verzeichnet wird, so dass die betreffende Kautschukeigenschaft "aktiv" beeinflusst wird. Zu diesen Füllstoffen wird z. B. Ruß oder Kieselsäure gezählt. Im Gegensatz zu den verstärkenden Füllstoffen ist bei den inaktiven (nur über den Volumenanteil verstärkenden) Füllstoffen eine fast durchweg stetige Veränderung des Eigenschaftsbildes mit dem Grad der Füllung zu beobachten. Als inaktiver Füllstoff wird in Kautschukmischungen z. B. Kreide verwendet.

Die Verstärkungswirkung beruht im Wesentlichen auf physikalischen und/oder chemischen Wechselwirkungen an der Grenzfläche zwischen Füllstoff und Kautschukmatrix. Deshalb spielen insbesondere die Oberflächeneigenschaften der Füllstoffe eine wesentliche Rolle. Viele bekannte Füllstoffe können an der Oberfläche modifiziert werden, um eine gute Anbindung an die Kautschukmatrix herzustellen und damit die Eigenschaften des Vulkanisates positiv zu beeinflussen.

Seit einiger Zeit werden auch sogenannte "Mikrogele" als Füllstoffe für Kautschuke verwendet. Unter Mikrogelen versteht man polymere Füllstoffe auf der Basis von Kautschukgelen, die im Allgemeinen aus Partikeln von peroxidvernetzten Dienkautschuken (BR, SBR, IR usw.) bestehen. Die Mikrogel-Partikel werden häufig durch Emulsions-Polymerisation bzw. Suspensions-Polymerisation hergestellt, wodurch sich Partikelgrößen zwischen ca. 5 und 1000 nm einstellen lassen.

Die Mikrogele werden in Ersatz für Silika oder Ruß verwendet, wobei ein vollständiger oder teilweiser Ersatz vorgesehen sein kann. Durch die Mikrogele wird eine geringere Dichte erzielt, die Vulkanisate werden also insgesamt leichter. Vulkanisate mit Kautschukgelen auf der Basis von CR-, SBR- und von NBR-Mikrogelen beispielsweise weisen bei 70 °C hohe Rückprallelastizitäten und damit einen niedrigen Rollwiderstand auf. Ein geringer Rollwiderstand ist zur Verringerung des Kraftstoffverbrauchs erwünscht. Bei 23 °C weisen die gleichen Mikrogel-gefüllten Kautschuke eine niedrige Rückprallelastizität und damit eine hohe Nassrutschfestigkeit auf. Die Differenz der Rückprallelastizitäten ist charakteristisch für Mikrogele. Für den Einsatz in technischen Gummiartikeln und Reifenbauteilen müssten jedoch die mechanischen Eigenschaften der mikrogelhaltigen Vulkanisate verbessert werden, die u. a. Einfluss auf die Sicherheit und Haltbarkeit der Produkte nehmen. Insbesondere sollten die Zugdehnung, die Bruchdehnung und der Abriebwiderstand verbessert werden.

Zur Verbesserung der physikalischen/mechanischen Eigenschaften wurden auch bereits chemisch modifizierte Mikrogele eingesetzt. Mikrogele sind beispielsweise aus der WO 02/12389 und den hierin zitierten US 5 124408, US 5 395 891, DE 197 67 29 und DE 197 01 487 bekannt. Die WO 02/12389 nennt auch chemisch modifizierte Mikrogele, insbesondere hydroxylmodifizierte Mikrogele, wobei für die Modifikation die Acrylate und Methacrylate von Hydroxyethanol, Hydroxypropanol und Hydroxybutanol eingesetzt werden. Die soweit durch Modifikation erzielten Eigenschaftsverbesserungen sind jedoch noch ungenügend.

Die Aufgabe der Erfindung bestand daher darin, die Nachteile im Stand der Technik zu vermeiden und die dynamisch-mechanischen Eigenschaften, insbesondere die viskoelastischen Eigenschaften, bei einem Mikrogel-gefüllten Kautschuk unter weitgehendem Erhalt der mit nicht-modifizierten Mikrogelen erzielbarten Eigenschaften einschließlich des Nassrutschverhaltens zu verbessern.

Die Aufgabe wird gelöst durch einen Füllstoff für Elastomere, insbesondere zur Verwendung in gummielastischen Produkten, der ein Mikrogel enthält, das aus vernetzten Dienkautschukpartikeln besteht, die ausschließlich an ihrer Oberfläche OH-Gruppen-modifiziert sind, wobei die OH-Gruppen funktionelle Gruppen einer oberflächenaktiven Substanz sind, wobei Moleküle der oberflächenaktiven Substanz kovalent an die Oberfläche der Mikrogel-Partikel gebunden sindund wobei die an die Mikrogel-Partikel gebundene oberflächenaktive Substanz ein OH-Gruppen-haltiger handelsüblicher Emulgator ist, wobei der handelsübliche Emulgator eine zuckerstämmige oberflächenaktive Substanz, insbesondere ein Saccharidester, -amid oder -ether, ein Innulinester, -amid oder -ether, oder ein sonstiges Zuckerderivat ist.

### Mikrogele

Als Basis-Mikrogele, die im Rahmen der Lehre dieser Erfindung modifiziert werden, können grundsätzlich alle im Stand der Technik bekannten und auch derzeit schon als Füllstoffe verwendeten bzw. vorgeschlagenen Mikrogele verwendet werden. Insbesondere wird Bezug genommen auf die in der WO 02/12389, der EP 1 110 986, der US5 395 891, der US 5 124 408, der DE 197 67 29 und der DE 197 01 487 dargestellten Basis-Mikrogele.

Unter Dienkautschuken werden hier alle solche Kautschuke verstanden, die nach DIN/ISO 1629 als R-Kautschuke bezeichnet werden. Hierzu zählen u.a. Naturkautschuk (NR), Styrol/Butadienkautschuk (SBR), Polybutadienkautschuk (BR), Nitrilkautschuk (NBR), Butylkautschuk (IIR), Hydrierter Nitrilkautschuk (HNBR) Styrol/Butadien/Acrylnitril-Kautschuk (SNBR), Polychloropren (CR), carboxylierter Styrol/Butadien-Kautschuk (s. S. 3a) (XSBR), carboxylierter Butadien/Acrylnitril-Kautschuk (XNBR), epoxydierter Naturkautschuk (ENR), epoxydierter Styrol/Butadien-Kautschuk (ESBR).

Für die Mikrogele können außerdem auch sogenannte M-Kautschuke eingesetzt werden, die neben einer gesättigten Hauptkette Doppelbindungen in Seitenketten aufweisen.

Die Mikrogele besitzen Teilchendurchmesser dso von ca. 5 bis 1000 nm, bevorzugt 20 bis 600 nm, insbesondere von ca. 60 nm (DVN nach DIN53206, gemessen mit Ultrazentrifugation). Die Mikrogel-Partikel sind in gängigen Lösungsmitteln unlöslich, jedoch quellbar. Zur Quantifizierung ihres Quellverhaltens wird häufig ein Quellungsindex (QI) in Toluol angegeben.

Für den Einsatz in Kautschukmischungen kann der erfindungsgemäße Füllstoff im Gemisch mit weiteren Füllstoffen eingesetzt werden, z. B. im Gemisch mit Ruß, hochdisperser gefällter oder pyrogener Kieselsäure, natürlichen oder synthetischen Silikaten, Metalloxiden, -carbonaten, -sulfaten und -hydroxiden, Thermoplasten und/oder Glaspartikeln oder -fasern.

Die OH-Gruppen-Modifizierung an der Oberfläche der Mikrogel-Partikel kann auf verschiedene Weise eingeführt werden. Allgemein kann dies durch chemische Umsetzung eines OH-Gruppen-haltigen Reagenzes mit dem Dienkautschuk des Mikrogels erfolgen, wobei bekannte Verfahren zur Modifizierung von Kautschuken angewendet werden könnten. Das Reagenz kann ? -Thioglyzerin sein oder eines der OH-Gruppen-haltigen Reagenzien, wie in DE OS 100 60 519 für die Modifizierung von Kautschukmischungen bzw. in der Dissertation von J. Schadebrodt, Universität Mainz, 1999, beschrieben.

Erfindungsgemäß sind die OH-Gruppen funktionelle Gruppen einer oberflächenaktiven Substanz, wobei Moleküle der oberflächenaktiven Substanz, vorzugsweise an ihrem hydrophoben Ende, kovalent an die Oberfläche der Mikrogel-Partikel gebunden sind.

Die Dichte der OH-Gruppen an der Oberfläche der Mikrogel-Partikel, die durch die Hydroxyfunktionalisierung mit ? -Thioglycerin oder einem Emulgator erreicht wird, beträgt vorzugsweise 2 bis 12 OH-Gruppen pro nm², vorzugsweise etwa 4 OH-Gruppen pro nm².

Die oberflächenaktive Substanz ist erfindungsgemäß ein OH-Gruppen-haltiger handelsüblicher Emulgator, vorzugsweise eine zuckerstämmige oberflächenaktive Substanz, insbesondere ein Saccharidester, -amid, -ether, oder -amin, ein Innulinester, - amid, oder -ether oder ein sonstiges Zuckerderivat, beispielsweise ein Harnstoffderivat (siehe Beispiele).

### Geeignete Emulgatoren

Als Emulgatoren sind beispielsweise Zuckerderivate geeignet.

Unter einem (Zucker)Derivat wird eine Verbindung verstanden, bei der das Grundgerüst (hier Zucker) dem Chemiker als solches bekannte funktionelle Gruppen oder Seitenketten trägt, insbesondere in Ersatz von -H oder -Alkyl. Das Derivat kann jedoch nur eine solche Verbindung sein, bei der das ursprüngliche Grundgerüst weiterhin als Grundmolekül anzusehen wäre, bei dem also die Derivatisierung nicht dazu führt, dass das Gesamtmolekül in eine andere Verbindungsklasse fiele oder die für die Erfindung wesentlichen Eigenschaften des Grundmoleküls nicht mehr aufwiese.

Geeignete obeflächenaktive Zuckerderivate sind beispielsweise aus der Dissertation von Matthias Schüttenhelm, "Reduktive Aminierung von Disacchariden zu längerkettigen Zuckerderivaten mit Tensidwirkung", Technische Universität Braunschweig, 1995, bekannt. Von den dort genannten Substanzen können u. a. für die Erfindung verwendet werden:
1-N-n-Dodecylamino-1-desoxy-6-O-(α-D-glucopyranosyl)-D-sorbit
N-n-Dodecyl-isomaltamin-1
1-N-n Dodecylamino-1-desoxy-3-O-(α-D-glucopyranosyl)-D-glyceroamin
N-n-Dodecyl-3-glycopyranosyl-glyceroamin-1
1-N-n-Dodecylamino-1-desoxy-4-O-(4-O-(α-D-glucopyranosyl)-α-D-glucopyranosyl)-D-sorbit
N-n-Dodecyl-maltotrioamin
1--N-n-Dodecylamino-1-desoxy-4-O-(α-D-glucopyranosyl)-D-sorbit
N-n-Dodecyl-maltamin
1-N-n-Butylamino-1-desoxy-3-O-(α-D-glucopyranosyl)-D-glycerin
N-n-Butyl-3-glucopyranosyl-glyceroamin-1
1-N-n-Dodecylamino-1-desoxy-4-O-(β-D-galactopyranosyl)-D-sorbit
N-n-Dodecyl-lactamin
1-N-n-Dodecylamino-1-desoxy-6-O-(α-D-galactopyranosyl)-D-sorbit
N-n-Dodecyl-melibiamin
1-N-n-Dodecylamin-1-desoxy-4-O-(β-D-glucopyranosyl)-D-sorbit
N-n-Dodecyl-cellobiamin;

Allgemein können Alkylaminosaccharide der Formel R₁-O-CH₂-(CHOH)₄-CH₂-NH-R₂, mit R₁ = H, Mono- oder Oligosaccharid und R₂ = Alkyl, Alkylen, verwendet werden.

Als Emulgatoren sind weiterhin beispielsweise Inulinderivate geeignet, die von den in EP 0 792 888, EP 0 792 889, EP 0 638 589 oder EP 0 618 216 (entsprechend DE 4310032) genannten abgeleitet sein können, wobei die Emulgatoren soweit erforderlich so modifziert werden, dass sie während einer Vulkanisation an einen Kautschuk bzw. ein Mikrogel chemisch gebunden werden können.

Geeignete Inulin-Emulgatoren sind beispielsweise Substanzen der Formel I 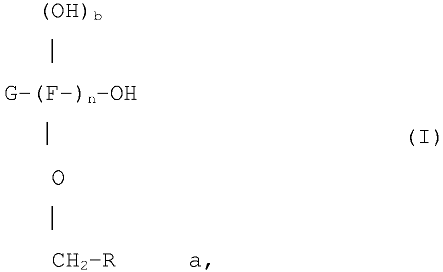
mit R = CH₂OH, -CHOH-(CH₂)ₘ-CH=CH₂,
m eine ganze Zahl von 0 bis 9,
n im Mittel ein Zahl von 10 bis 50 und vorzugsweise von > 15,
a und b eine Zahl von 0 bis 3, wobei a + b = 3 ist,
G eine Glucosepyranosegruppe und
F eine Fructofuranosegruppe ist, wobei die OH-Gruppen teilweise carbonsäureverestert sein können.

Geeignete oberflächenaktive, an die Mikrogele anpolymerisierbare Harnstoffderivate sind beispielsweise solche der Formel II oder III

(II) R₁-O-CH₂-CH(OH)-CH(OR₂)-CH(OH)-CH(OH)-CH₂-NR₃(CO)-NHR₄

(III) R₁-O-CH₂-CH(OH)-CH(OR₂)-CH(OH)-CHX-CH₂OH;

mit x = NR₃-(CO)-NHR₄
worin bedeuten:
R₁ = H oder ein Mono- oder Oligosaccharid,
R₂ = H oder ein Mono- oder Oligosaccharid,
R₃ = Alkyl oder Alkyl, linear oder verzweigt, mit 4 bis 21 C-Atomen, sowie
R₄ = Alkylmethacrylat-Gruppe, -Alkylacrylat-Gruppe oder -Vinyl-Gruppe.

### Verfahren

Der erfindungsgemäße Füllstoff kann hergestellt werden, indem die Modifizierung des Mikrogels mit Hilfe eines OH-Gruppen-haltigen Reagenzes oder Emulgators im Zuge der Vernetzung der Mikrogelpartikel erfolgt. Hierfür kann das OH-Gruppen-haltige Reagenz bei nicht-radikalischer Vernetzung eine Doppelbindung bzw. eine funktionelle Gruppe enthalten, die in der Lage ist, an das Gel zu binden. Bei radikaler Vernetzung kann die Anbindung auch über Alkylreste erfolgen. Die Herstellung der Mikrogel-Partikel selbst ist u. a. in den oben genannten Schriften zum Stand der Technik beschrieben, z. B. in US 5,395,891. Auf die dort geschilderten Verfahren zur Herstellung von Mikrogelen wird hiermit ausdrücklich Bezug genommen.

Wie im Stand der Technik für Mikrogele bekannt, können die Mikrogel-Partikel mit einer Emulsions- oder Suspensionspolymerisation in wässriger Lösung erhalten werden. Das OH-Gruppen-haltige Reagenz, und vorzugsweise der OH-Gruppen-haltige Emulgator kann der wässrigen Phase zugesetzt werden, wobei der OH-Gruppen-haltige Emulgator als Emulgator für die Emulsions- oder Suspensionspolymerisation dient.

Alternativ kann die OH-Gruppen-Modifikation auch nach der Gelisolation in einem gesonderten Schritt erfolgen. Das Gel wird i. A. in Lösungsmittel gequollen (z. B. DMF) und dann mit dem jeweiligen Reagenz (z. B. Thioglycerin) modifiziert, d. h. umgesetzt.

Die Erfindung umfasst auch eine Kautschukmischung, die den erfindungsgemäßen und vorstehend in seinen verschiedenen möglichen Ausführungsformen ausführlich beschriebenen Füllstoff alleine oder in Mischungen mit anderen Füllstoffen enthält.

Den Kautschukmischungen können weitere Kautschukhilfsmittel zugesetzt sein, die dem Fachmann bekannt sind. Zu derartigen Kautschukhilfsmitteln zählen u. a. Vernetzer, Reaktionsbeschleuniger, Alterungsschutzmittel, Wärmestabilisatoren, Licht- und UV-Schutzmittel, Ozonschutzmittel, Verarbeitungshilfsmittel, Weichmacher, Treibmittel, Farbstoffe, Streckmittel usw. Derartige Zusätze und Hilfsmittel sind beispielsweise aus: J. Schnetger, Lexikon der Kautschuktechnik, 2. Auflage, Hüthig Buch Verlag, Heidelberg, 1991, u. a. S. 42 - 48 bekannt.

Die Vulkanisation der Kautschukmischungen mit wenigstens teilweiser erfindungsgemäßer Mikrogel-Füllung wird entsprechend der üblichen, im Stand der Technik allgemein bekannten Vorschriften durchgeführt, häufig in Anwesenheit von Schwefel oder Schwefelspendern durchgeführt.

Die zugehörigen Vulkanisate sind für die Herstellung technischer Gummiprodukte, insbesondere für Fahrzeugreifen sowie speziell die Laufstreifen von Fahrzeugluftreifen geeignet. Die Erfindung umfasst daher ebenso ein Kautschukvulkanisationsprodukt, insbesondere in Form eines technischen Gummiprodukts oder eines Fahrzeugreifens, das wenigstens in Teilen mit einer Kautschukmischung, die den erfindungsgemäßen Füllstoff enthält, hergestellt wurde.

Im Folgenden wird die Erfindung anhand von Beispielen näher beschrieben.

### BEISPIEL 1: Einsatz erfindungsgemäßer Mikrogele in Pulverform

Bei sämtlichen in den Tabellen angegebenen Mischungsbeispielen sind die Mengenangaben Gewichtsteile, die auf 100 Gewichtsteile Gesamtkautschuk bezogen sind (phr). Die Mischungsverhältnisse für die verschiedenen Beispiele sind nachfolgend in Tabellenform angegeben.

### Vergleichsbeispiele 1 bis 5: Ref. 1 bis Ref. 5

Die als Ref. 1 und Ref. 2 bezeichneten Beispiele sind Referenzbeispiele (ohne Mikrogel) aus Silika-gefülltem Naturkautschuk mit einem Anteil an ölverstrecktem oder nichtverstrecktem Lösungs-SBR. (LSBR, BUNA^{®} VSL 5025-Typen)

Der Kautschuk nach Ref. 4 enthält ein nichtmodifiziertes Mikrogel aus SBR-Kautschuk (Styrol-Butadien-Kautschuk) der Fa. Bayer. Das Mikrogel wird pulverförmig eingemischt, wie für Füllstoffe üblich.

Ref. 5 enthält das nichtmodifizierte Mikrogel dosiert als Masterbatch, bestehend aus 50 Teilen Naturkautschuk und 50 Gewichtsteilen Mikrogel, hergestellt durch Vermischung von Naturkautschuklatex und Mikrogellatex und gemeinsamer Präzipitation (beschrieben in EP 0 854 171 A1, Beispiel 1).

### Erfindungsgemäße Beispiele

In den Mischungen OH-Gel 1.1, OH-Gel 1.2 und OH-Gel 2.1 wird das Mikrogel pulverförmig eingemischt. Alle Mischungen werden, wie üblich und dem Fachmann bekannt, im Innenmischer hergestellt.

**Tabelle 1**

| | Vergleichsbeispiele | | | | erfindungsgemäße Beispiele | | |
|---|---|---|---|---|---|---|---|
| | Ref. 1 | Ref. 2 | Ref. 4 | Ref. 5 | OH-Gel 1.1 | OH-Gel 1.2 | OH-Gel 2.1 |
| NR¹ | 80 | 80 | 80 | 55 | 80 | 80 | 80 |
| VSL 5025-1² | 27,5 | 0 | 0 | 0 | 0 | 0 | 0 |
| VSL 5025-0³ | 0 | 20 | 20 | 20 | 20 | 20 | 20 |
| Mikrogel | 0 | 0 | 25 | 0 | 0 | 0 | 0 |
| Mikrogel-MB | 0 | 0 | 0 | 50 | 0 | 0 | 0 |
| OH-Mikrogel 1 (4,4 OH/qnm) | 0 | 0 | 0 | 0 | 25 | 25 | 0 |
| OH-Mikrogel 2 (9 OH/qnm) | 0 | 0 | 0 | 0 | 0 | 0 | 25 |
| Silika | 50 | 50 | 25 | 25 | 25 | 25 | 25 |
| Si-69⁴ | 5 | 5 | 3 | 3 | 5 | 3 | 5 |
| 6-PPD⁵ | 1,5 | 1,5 | 1,5 | 1,5 | 1,5 | 1,5 | 1,5 |
| ZnO | 2 | 2 | 2 | 2 | 2 | 2 | 2 |
| Stearic Acid | 5 | 5 | 5 | 5 | 5 | 5 | 5 |
| Sulphur | 2 | 2 | 2 | 2 | 2 | 2 | 2 |
| CBS⁶ | 1,4 | 1,4 | 1,4 | 1,4 | 1,4 | 1,4 | 1,4 |
| DPG⁷ | 0,7 | 0,7 | 0,7 | 0,7 | 0,7 | 0,7 | 0,7 |

| | | | | | | | |
|---|---|---|---|---|---|---|---|
| 1 NR = Naturkautschuk 2 Buna^{®} VSL = L-SBR-Lösungs-Styrol-Butadien-Kautschuk; VSL 5025-1 = BUNA VSL 5025-1 = LSBR mit 25 % Styrol, 50 % (g/100 g) Vinyl-BR, 25 % cis-BR mit 37,5 phr Öl verstreckt 3 VSL 5025-0 = wie VSL 5025-1, nicht ölverstreckt 4 Si-69^{®} = TESPT = bis-(-Triethoxysilylpropyl)tetrasulfid / Kupplungsreagens 5 6-PPD = DMBPPD = N-(1,3-Dimethylbutyl)-N'-phenyl-p-phenylendiamin 6 CBS = Benzothiazyl-2-cyclohexylsulfenamid /Beschleuniger 7 DPG = N,N'-Diphenylguanidin | | | | | | | |

Durch 20-minütige Vulkanisation bei 150 °C unter Druck wurden aus den verschiedenen Mischungen Prüfkörper hergestellt.

Mit diesen Prüfkörpern wurden für die Kautschukindustrie typische Materialeigenschaften bestimmt. Für die Tests an Prüfkörpern wurden folgende Testverfahren angewandt:
- Zugfestigkeit bei Raumtemperatur gemäß DIN 53 504
- Reißdehnung bei Raumtemperatur gemäß DIN 53 504
- Spannungswerte bei 50, 100, 200 und 300 % Dehnung bei Raumtemperatur gemäß DIN 53 504
- Shore-A-Härte bei Raumtemperatur und 70 °C gemäß DIN 53 505
- Rückprallelastizität bei Raumtemperatur und 70 °C gemäß DIN 53 512
- Verlustfaktor tan δ bei 0 °C und 60 °C gemäß DIN 53 513 aus Messung mit konstanter Verformungsamplitude von 0,2 % bei 10 % Vorverformung in Kompression mit 10 Hz dynamischer Verformungsfrequenz
- Abrieb gemäß DIN 53 516
- Die Bruch-Energie wird berechnet aus den Daten des Zugversuchs nach DIN 53504

Eine Übersicht der wichtigsten Eigenschaften für die Beispiele ist in Tabelle 2 wiedergegeben.

**Tabelle 2**

| | Ref. 1 | Ref. 2 | Ref. 4 | Ref. 5 | OH-Gel 1.1 | OH-Gel 1.2 | OH-Gel 2.1 |
|---|---|---|---|---|---|---|---|
| Density (g/cm³) | 1,13 | 1,13 | 1,04 | 1,04 | 1,04 | 1,04 | 1,05 |
| M¹ (50%) (N/mm²) | 1,01 | 1,18 | 1,09 | 1,03 | 1,21 | 1,11 | 1,17 |
| M (100 %) (N/mm²) | 1,68 | 2,06 | 1,77 | 1,60 | 2,23 | 1,95 | 2,04 |
| M (200 %) (N/mm²) | 4,36 | 5,74 | 4,18 | 3,76 | 5,30 | 4,63 | 3,62 |
| M (300 %) (N/mm²) | 8,59 | 11,11 | 8,57 | 7,84 | 8,62 | 7,65 | 5,79 |
| Tensile Strength (N/mm²) | 22,7 | 24,1 | 21,1 | 20,8 | 14,1 | 14,1 | 10,0 |
| Elong. at Break (%) | 616 | 561 | 540 | 562 | 469 | 502 | 469 |
| Break Energy (J/cm³) | 51,56 | 51,48 | 39,14 | 40,24 | 26,70 | 27,89 | 19,02 |
| Shore Hardness A RT | 59,4 | 62,6 | 58,1 | 57,4 | 59,5 | 57,9 | 59,2 |
| Shore Hardness A 70 °C | 56,4 | 59,2 | 54,8 | 53,9 | 56,0 | 53,8 | 55,5 |
| RPE RT (%)² | 43,4 | 46,5 | 43,7 | 41,8 | 50,3 | 48,3 | 50,7 |
| RPE 70 °C (%)² | 62,2 | 63,2 | 64,5 | 62,6 | 65,3 | 63,8 | 64,1 |

| | | | | | | | |
|---|---|---|---|---|---|---|---|
| ¹ M(x%) M = Modul (aus Zugversuch) bei x Prozent Dehnung ² RPE = Rückprallelastizität (bei Raumtemperatur (RT) oder 70 °C gemessen) | | | | | | | |

### BEISPIEL 2: Einsatz erfindungsgemäßer Mikrogele als Masterbatch

### Vorschrift zur Herstellung eines Masterbatchs in Lösungs-SBR für unmodifiziertes Mikrogel (Vergleichsbeispiel 6)

Das BUNA^{®} VSL 5025-0 wird in der Menge gemäß Tabelle in Toluol gelöst. Dies geschieht unter Rühren, im Allgemeinen wenigstens 12 Stunden. Das Mikrogel wird in Toluol unter mindestens 12-stündigem Rühren dispergiert. Die Lösung und die Suspension werden vereinigt und wenigstens einige Stunden weitergerührt. Anschließend wird durch Eingießen der Mischung in kochendes Wasser gefällt. Der Niederschlag wird gewaschen und getrocknet.

### Vorschrift zur Herstellung eines Masterbatchs in Lösungs-SBR für erfindungsgemäßes OH-Gruppen-modifiziertes Mikrogel (auch "OH-Gel" genannt, Beispiel 3.1)

Das BUNA^{®} VSL 5025-0 wird in der Menge gemäß Tabelle in Toluol gelöst. Dies geschieht unter Rühren, im Allgemein wenigstens 12 Stunden. Das Mikrogel wird in einer Mischung von Toluol und DMF unter mindestens 12-stündigem Rühren dispergiert. Die Lösung und die Suspension werden vereinigt und wenigstens einige Stunden weitergerührt. Anschließend wird durch Eingießen der Mischung in kochendes Wasser gefällt. Der Niederschlag wird gewaschen und getrocknet.

Die Mischungen wurden, wie üblich und dem Fachmann bekannt, im Innenmischer hergestellt.

**Tabelle 3**

| | Vergleichsbeispiele | | | erfindungsgemäßes Beispiel |
|---|---|---|---|---|
| | Ref. 1 | Ref.5 | Ref.6 | OH-Gel 3.1 |
| NR | 80 | 55 | 80 | 80 |
| VSL 5025-1 | 27.5 | 0 | 0 | 0 |
| VSL 5025-0 | 0 | 20 | 0 | 0 |
| Mikrogel-MB | 0 | 50 | 0 | 0 |
| Gel MB-C | 0 | 0 | 45 | 0 |
| OH-Gel MB-C | 0 | 0 | 0 | 45 |
| Silica | 50 | 25 | 25 | 25 |
| Si69 | 5 | 3 | 3 | 5 |
| 6-PPD | 1.5 | 1.5 | 1.5 | 1.5 |
| ZnO | 2 | 2 | 2 | 2 |
| Stearinsäure | 5 | 5 | 5 | 5 |
| CBS | 1.4 | 1.4 | 1.4 | 1.4 |
| DPG | 0.7 | 0.7 | 0.7 | 0.7 |
| Schwefel | 2 | 2 | 2 | 2 |

| | | | | |
|---|---|---|---|---|
| MB - Masterbatch des Mikogeles in Kautschuk Mikrogel-MB - Zusammensetzung. 100 phr NR, 100 phr unmodifiziertes Mikrogel Gel MB-C - Zusammensetzung: 100 phr VSL 5025-0, 125 phr unmodifiziertes Mikrogel OH-Gel MB-C - Zusammensetzung: 100 phr VSL 5025-0, 125 phr OH-modifiziertes Mikrogel mit 4.4 OH/qnm | | | | |

Durch 20-minütige Vulkanisation bei 150 °C unter Druck wurden aus den verschiedenen Mischungen Prüfkörper hergestellt.

Mit diesen Prüfkörpern wurden für die Kautschukindustrie typische Materialeigenschaften bestimmt. Für die Tests an Prüfkörpern wurden folgende Testverfahren angewandt:
- Zugfestigkeit bei Raumtemperatur gemäß DIN 53 504
- Reißdehnung bei Raumtemperatur gemäß DIN 53 504
- Spannungswerte bei 50, 100, 200 und 300 % Dehnung bei Raumtemperatur gemäß DIN 53 504
- Shore-A-Härte bei Raumtemperatur und 70 °C gemäß DIN 53 505
- Rückprallelastizität bei Raumtemperatur und 70 °C gemäß DIN 53 512
- Verlustfaktor tan δ bei 0 °C und 60 °C gemäß DIN 53 513 aus Messung mit konstanter Verformungsamplitude von 0,2 % bei 10 % vor Verformung in Kompression mit 10 Hz dynamischer Verformungsfrequenz
- Abrieb gemäß DIN 53 516
- Die Bruch-Energie wird berechnet aus den Daten des Zugversuchs nach DIN 53504

Eine Übersicht der wichtigsten Eigenschaften für die Beispiele ist in Tabelle 4 wiedergegeben.

**Tabelle 4**

| | Ref. 1 | Ref. 5 | Ref. 6 | OH-Gel 3.1 |
|---|---|---|---|---|
| opt. Vulkanisationszeit bei 150 °C (min) | 20 | 20 | 20 | 20 |
| | | | | |
| Dichte (g/cm³) | 1,133 | 1,041 | 1,04 | 1,062 |
| Zugfestigkeit (MPa) | 22,7 | 21,1 | 21,2 | 10,4 |
| Bruchausdehnung (%) | 580 | 521 | 539 | 441 |
| M⁵ (100 %) (MPa) | 2,17 | 2 | 1,92 | 2,01 |
| M (200 % (MPa) | 5,5 | 4,69 | 4,38 | 3,44 |
| M (300 %) (MPa) | 9,95 | 9,28 | 8,67 | 6,23 |
| Bruch-Energie (J/cm³) | 50,6 | 38,5 | 39,7 | 17,5 |
| Härte Shore A bei RT | 63,4 | 60,6 | 59,6 | 63,8 |
| Härte Shore A bei 70 °C | 61 | 57,4 | 56,5 | 61,5 |
| Rückstellung bei RT (%) | 47,8 | 41,8 | 41,6 | 53,7 |
| Rückstellung bei 70 °C (%) | 67,1 | 69,4 | 69,3 | 69,9 |

| | | | | |
|---|---|---|---|---|
| M = Modul RT = Raumtemperatur | | | | |

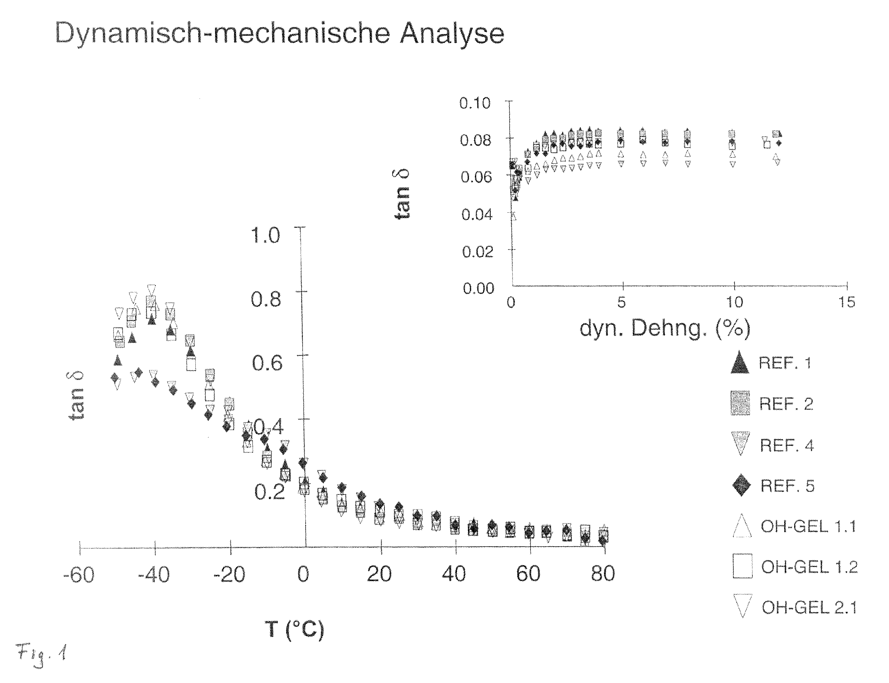

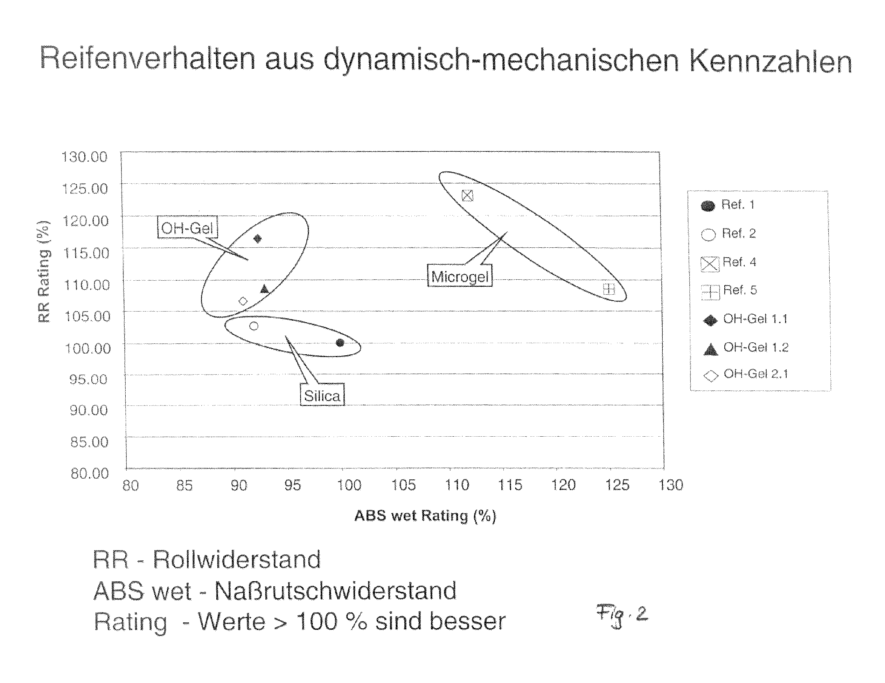

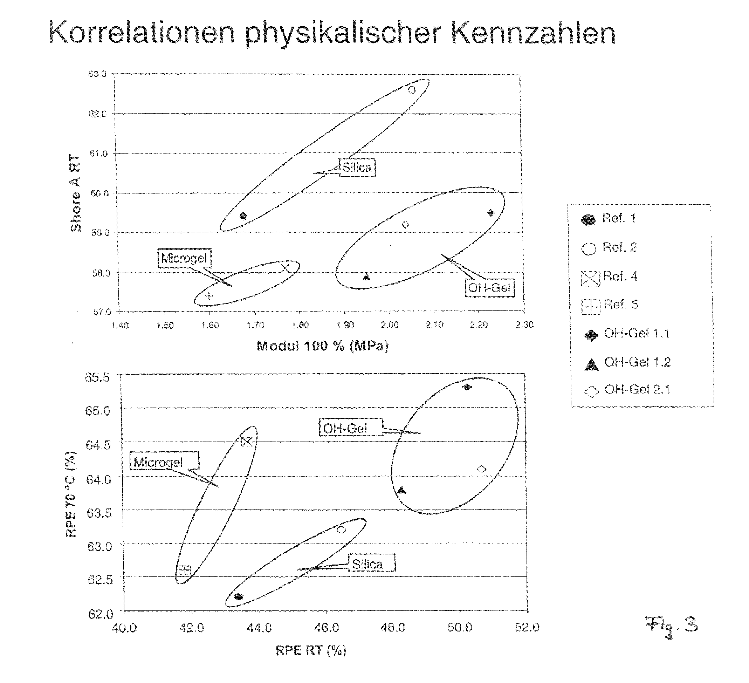

Einige der Eigenschaften der Prüfkörper sind im Vergleich mit den Eigenschaften Silika- und Mikrogel(unmodifiziert)-gefüllter Kautschuke in den Abbildungen 1 bis 3 visualisiert.

Es zeigen:
- Fig. 1:: Dynamisch-mechanische Analyse:
tan δ-Werte zu verschiedenen Beispielen;
- Fig. 2:: Vergleich des dynamisch-mechanischen Reifen-Verhaltens über eine RR-ABS-Auftragung, d. h. anhand mechanischer Kennzahlen
- Fig. 3:: Korrelationen physikalischer Kennzahlen:
Auftragungen zu Shore A-Härte bei Raumtemperatur über dem Spannungs-Modul einerseits und Raumtemperatur über 70 °C- Rückprallelastizitäten andererseits.

Die Abbildungen zeigen, das die Eigenschaften der mit dem erfindungsgemäßen Mikrogel gefüllten Kautschuke den vorteilhaften Eigenschaften der Silika-gefüllten Mischungen näher kommen als dies mit unmodifizierten Mikrogel-Füllstoffen möglich wäre.

## Patentansprüche

1. Füllstoff für Elastomere, insbesondere zur Verwendung in gummielastischen Produkten, **dadurch gekennzeichnet, dass** er ein Mikrogel enthält, das aus vernetzten Dienkautschukpartikeln besteht, die ausschließlich an ihrer Oberfläche OH-Gruppen-modifiziert sind, wobei die OH-Gruppen funktionelle Gruppen einer oberflächenaktiven Substanz sind, wobei Moleküle der oberflächenaktiven Substanz kovalent an die Oberfläche der Mikrogel-Partikel gebunden sind und wobei die an die Mikrogel-Partikel gebundene oberflächenaktive Substanz ein OH-Gruppen-haltiger handelsüblicher Emulgator ist, wobei der handelsübliche Emulgator eine zuckerstämmige oberflächenaktive Substanz, insbesondere ein Saccharidester, -amid oder -ether, ein Innulinester, -amid oder -ether, oder ein sonstiges Zuckerderivat ist.

2. Füllstoff nach Anspruch 1, **dadurch gekennzeichnet, dass** die Moleküle der oberflächenaktiven Substanz an ihrem hydrophoben Ende kovalent an die Oberfläche der Mikrogel-Partikel gebunden sind.

3. Füllstoff nach Anspruch 1 oder 2, **dadurch gekennzeichnet, dass** die Dichte der an der Oberfläche gebundenen OH-Gruppen 2 bis 12, vorzugsweise etwa 4 OH-Gruppen pro nm² beträgt.

4. Verfahren zur Herstellung eines Füllstoffs nach einem der Ansprüche 1 bis 3, **dadurch gekennzeichnet, dass** die Modifizierung des Mikrogels mit Hilfe eines OH-Gruppen-haltigen Emulgators im Zuge der Vernetzung der Mikrogelpartikel erfolgt.

5. Verfahren zur Herstellung eines Füllstoffs nach Anspruch 4, **dadurch gekennzeichnet, dass** der Emulgator wenigstens eine freie Doppelbindung aufweist.

6. Verfahren nach Anspruch 4 oder 5, **dadurch gekennzeichnet, dass** die Mikrogel-Partikel mit einer Emulsions- oder Suspensionspolymerisation in wässriger Lösung hergestellt werden, wobei der OH-Gruppen-haltige Emulgator der wässrigen Phase zugesetzt und als Emulgator für die Emulsions- oder Suspensionspolymerisation verwendet wird.

7. Kautschukmischung, insbesondere für die Herstellung eines Teils eines Fahrzeugreifens, enthaltend den Füllstoff nach einem der Ansprüche 1 bis 3.

8. Kautschukvulkanisationsprodukt, insbesondere Fahrzeugreifen, wenigstens in Teilen hergestellt mit einer Kautschukmischung nach Anspruch 7.

## Claims

1. Filler for elastomers, in particular for use in elastomeric products, **characterized in that** it comprises a microgel which is composed of crosslinked diene rubber particles modified by OH groups exclusively at their surface, where the OH groups are functional groups of a surface-active substance, where molecules of the surface-active substance have covalent bonding to the surface of the microgel particles, and where the surface-active substance bonded to the microgel particles is a commercially available emulsifier containing OH groups, where the commercially available emulsifier is a sugar-derived surface-active substance, in particular a saccharide ester, saccharide amide or saccharide ether, an inulin ester, inulin amide or inulin ether, or any other sugar derivative.

2. Filler according to Claim 1, **characterized in that** the molecules of the surface-active substance have covalent bonding at their hydrophobic end to the surface of the microgel particles.

3. Filler according to Claim 1 or 2, **characterized in that** the density of the OH groups bonded at the surface is from 2 to 12, preferably about 4, OH groups per nm².

4. Process for the production of a filler according to any of Claims 1 to 3, **characterized in that** the modification of the microgel is achieved with the aid of an emulsifier containing OH groups during the course of the crosslinking of the microgel particles.

5. Process for the production of a filler according to Claim 4, **characterized in that** the emulsifier has at least one free double bond.

6. Process according to Claim 4 or 5, **characterized in that** the microgel particles are produced in aqueous solution by an emulsion polymerization or suspension polymerization process, where the emulsifier containing OH groups is added to the aqueous phase and is used as emulsifier for the emulsion polymerization or suspension polymerization process.

7. Rubber mixture, in particular for the production of a part of a tyre, comprising the filler according to any of Claims 1 to 3.

8. Rubber vulcanization product, in particular tyre, produced at least in parts with a rubber mixture according to Claim 7.

## Revendications

1. Charge pour élastomères, notamment pour une utilisation dans des produits élastiques de caoutchouc, **caractérisée en ce qu'**elle contient un microgel qui consiste en des particules de caoutchouc diène réticulées qui sont modifiées exclusivement à leur surface par des groupes OH, les groupes OH étant des groupes fonctionnels d'une substance tensioactive, les molécules de la substance tensioactive étant liées par covalence à la surface des particules de microgel et la substance tensioactive liée aux particules de microgel étant un émulsifiant du commerce comportant des groupes OH, l'émulsifiant du commerce étant une substance tensioactive issue d'un sucre, en particulier un ester, amide ou éther de saccharide, un ester, amide ou éther d'inuline, ou un autre dérivé de sucre.

2. Charge selon la revendication 1, **caractérisée en ce que** les molécules de la substance tensioactive sont à leur extrémité hydrophobe liées par covalence à la surface des particules de microgel.

3. Charge selon la revendication 1 ou 2, **caractérisée en ce que** la densité des groupes OH liés à la surface vaut 2 à 12, de préférence environ 4 groupes OH par nm².

4. Procédé de fabrication d'une charge selon l'une quelconque des revendications 1 à 3, **caractérisé en ce que** la modification du microgel s'effectue à l'aide d'un émulsifiant comportant des groupes OH, au cours de la réticulation des particules de microgel.

5. Procédé de fabrication d'une charge selon la revendication 4, **caractérisé en ce que** l'émulsifiant comporte au moins une double liaison libre.

6. Procédé selon la revendication 4 ou 5, **caractérisé en ce qu'**on produit en solution aqueuse les particules de microgel par une polymérisation en émulsion ou suspension, en ajoutant à la phase aqueuse l'émulsifiant comportant des groupes OH et en utilisant l'émulsifiant pour la polymérisation en émulsion ou suspension.

7. Mélange de caoutchouc, notamment pour la fabrication d'une partie d'un pneu automobile, contenant la charge selon l'une quelconque des revendications 1 à 3.

8. Produit de vulcanisation de caoutchouc, notamment pneu automobile, fabriqué en moins en partie avec un mélange de caoutchouc selon la revendication 7.
